# EUROPEAN PATENT APPLICATION

(11) **EP 3 842 935 A1**
(43) Date of publication of application: **30.06.2021**
(21) Application number: 20198118.0
(22) Date of filing: 24.09.2020
(51) Int. Cl.: G06F 9/30, G06F 9/38

(54) **SYSTEMS, APPARATUSES, AND METHODS FOR 512-BIT OPERATIONS**

(30) Priority: 27.12.2019 US 201916728785
(71) Applicant: INTEL Corporation, Santa Clara, CA 95054 (US)
(72) Inventor: OULD-AHMED-VALL, ElMoustapha, Chandler, Arizona 85226 (US)
(74) Representative: Samson & Partner Patentanwälte mbB

(57) **Abstract**

Embodiments of systems, apparatuses, and methods for performing 512-bit operations are detailed. For example, an apparatus comprising: decoder circuitry to decode an instruction having fields for an opcode and at least one operand identifier; and execution circuitry to execute the decoded instruction to perform a 512-bit operation according to the opcode on the at least one operand, wherein at least one of the identified operand and the execution circuitry is less than 512-bit is detailed.

## Description

### FIELD OF INVENTION

The field of invention relates generally to computer processor architecture, and, more specifically, to performing 512-bit operations.

### BACKGROUND

Many modern processors include single instruction multiple data (SIMD) or vector support. Examples include support for performing operations on 128-bit packed data operands (e.g., 128-bit SIMD or vector registers) and 256-bit packed data operands. However, how those operations are performed may differ.

### Brief Description of the Drawings

The present invention is illustrated by way of example and not limitation in the figures of the accompanying drawings, in which like references indicate similar elements and in which:
FIG. 1 illustrates an embodiment of hardware to process a "512-bit" instruction.
FIG. 2A is a block diagram illustrating both an exemplary in-order pipeline and an exemplary register renaming, out-of-order issue/execution pipeline according to embodiments of the invention.
FIG. 2B is a block diagram illustrating both an exemplary embodiment of an in-order architecture core and an exemplary register renaming, out-of-order issue/execution architecture core to be included in a processor according to embodiments of the invention.
FIG. 3 illustrates embodiments of a processor or core utilizing 512-bit operands with 256-bit execution circuitry.
FIG. 4 illustrates embodiments of a processor or core utilizing a single 512-bit operand with 256-bit execution circuitry.
FIG. 5 illustrates embodiments of a processor or core utilizing 256-bit operands with 256-bit execution circuitry to produce 512-bit results.
FIG. 6 illustrates embodiments of a processor or core utilizing a single 512-bit operand with 256-bit execution circuitry.
FIG. 7 illustrates embodiments of a processor or core utilizing a single 512-bit operand with 512-bit execution circuitry
FIG. 8 illustrates an embodiment of method performed by a processor to process a "512-bit" instruction.
FIG. 9A is a block diagram illustrating an exemplary instruction format according to embodiments of the invention.
FIG. 9B is a block diagram illustrating the fields of the instruction format that make up the full opcode field according to one embodiment of the invention.
FIG. 9C is a block diagram illustrating the fields of the instruction format that make up the register index field according to one embodiment of the invention.
FIG. 9D is a block diagram illustrating the fields of the instruction format that make up the augmentation operation field according to one embodiment of the invention.
FIG. 10 is a block diagram of a register architecture according to one embodiment of the invention.
FIGS. 11A-B illustrate a block diagram of a more specific exemplary in-order core architecture, which core would be one of several logic blocks (including other cores of the same type and/or different types) in a chip.
FIG. 12 is a block diagram of a processor that may have more than one core, may have an integrated memory controller, and may have integrated graphics according to embodiments of the invention.
FIG. 13 shown a block diagram of a system in accordance with one embodiment of the present invention.
FIG. 14 is a block diagram of a first more specific exemplary system in accordance with an embodiment of the present invention.
FIG. 15 is a block diagram of a second more specific exemplary system in accordance with an embodiment of the present invention.
FIG. 16 is a block diagram of a SoC in accordance with an embodiment of the present invention.
FIG. 17 is a block diagram contrasting the use of a software instruction converter to convert binary instructions in a source instruction set to binary instructions in a target instruction set according to embodiments of the invention.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Current support for 512-bit data operations (e.g., such those using 512-bit single instruction, multiple data (SIMD) or vector registers) is performed using 512-bit execution units (e.g., 512-bit ALUs). However, 512-bit execution units may have some disadvantages such as an increase in physical size and energy usage than 128-bit or 256-bit execution units. Additionally, having dedicated 512-bit registers has similar size and energy issues. Detailed below are approaches that support 512-bit data operations that do not use a 512-bit source and/or a 512-bit execution unit.

In particular, in some embodiments, one or more 256-bit data operands are operated on by one or more 256-bit execution resources. In other embodiments, one or more 256-bit data operands are operated on by 512-bit execution resources. In other embodiments, one or more 512-bit data operands are operated on by 256-bit execution resources. As such, detailed herein are embodiments to improve a computer itself by providing one or more ways to allow for 512-bit operations.

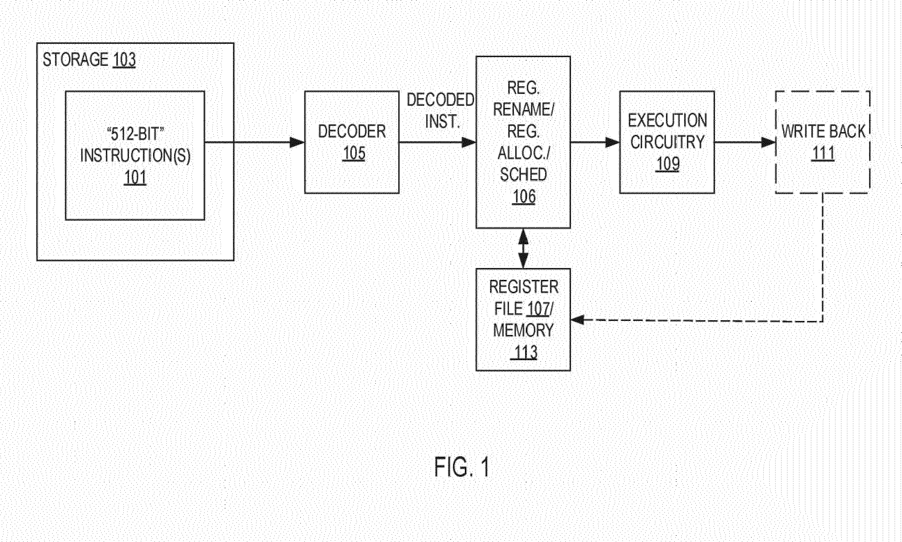

**FIG. 1** illustrate embodiments of hardware to process a "512-bit" instruction. This instruction is called a "512-bit" instruction as one or more of the data or the execution resources is not 512-bit, but the operation effectively is 512-bit. For example, 256-bit registers are used with 256-bit execution circuitry to produce at "512-bit" result (which may be in the form of a result store in 2 256-bit destinations or a single 512-bit destination).

As illustrated, storage 103 stores a "512-bit" instruction 101 to be executed.

The instruction 101 is received by decode circuitry 105. For example, the decode circuitry 105receives this instruction from fetch logic/circuitry. The instruction includes fields for an opcode, an identifier of at least a first source location, and an identifier of a destination location. In some embodiments, the identified source(s) and destination are registers, and in other embodiments one or more are memory locations. In some embodiments, the opcode details which operation is to be performed including, arithmetic, Boolean, data manipulation (e.g., shift, rotate, permute, etc.).

The decode circuitry 105 decodes the instruction into one or more operations. Details about this decoding are noted below, but may include mapping 256-bit operands to 512-bit equivalents, generating operations to be performed on one or more 256-bit execution circuits (instead of a 512-bit execution circuit), etc. In some embodiments, this decoding includes generating a plurality of micro-operations to be performed by execution circuitry (such as execution circuitry 109). The decode circuitry 105 also decodes instruction prefixes.

In some embodiments, register renaming, register allocation, and/or scheduling circuitry 106 provides functionality for one or more of: 1) renaming logical operand values to physical operand values (e.g., a register alias table in some embodiments) which may include mapping multiple 256-bit registers to equivalently be a 512-bit register, 2) allocating status bits and flags to the decoded instruction, and 3) scheduling the decoded instruction for execution on execution circuitry out of an instruction pool (e.g., using a reservation station in some embodiments).

Registers (register file) 107 and/or memory 113 store data as operands of the instruction to be operated on by execution circuitry 109. Exemplary register types include packed data (e.g., SIMD or vector) registers, general purpose registers, and floating-point registers.

Execution circuitry 109 executes the decoded instruction according to the opcode as scheduled.

In some embodiments, retirement/write back circuitry 111 architecturally commits the destination register into the registers 107 or memory 113 and retires the instruction.

In some embodiments, the arithmetic recurrence instruction includes a field for a writemask register operand (k). A writemask is used to conditionally control per-element operations and updating of results. Depending upon the implementation, the writemask uses merging or zeroing masking. Instructions encoded with a predicate (writemask, write mask, or k register) operand use that operand to conditionally control per-element computational operation and updating of result to the destination operand. The predicate operand is known as the opmask (writemask) register. In some embodiments, the opmask is a set of architectural registers of size 64-bit. Note that from this set of architectural registers, only k1 through k7 can be addressed as predicate operand. k0 can be used as a regular source or destination but cannot be encoded as a predicate operand. Note also that a predicate operand can be used to enable memory fault-suppression for some instructions with a memory operand (source or destination). As a predicate operand, the opmask registers contain one bit to govern the operation/update to each data element of a vector register. In general, opmask registers can support instructions with element sizes: single-precision floating-point (float32), integer doubleword(int32), double-precision floating-point (float64), integer quadword (int64). The length of an opmask register, MAX_KL, is sufficient to handle up to 64 elements with one bit per element, i.e. 64 bits. For a given vector length, each instruction accesses only the number of least significant mask bits that are needed based on its data type. An opmask register affects an instruction at per-element granularity. So, any numeric or non-numeric operation of each data element and per-element updates of intermediate results to the destination operand are predicated on the corresponding bit of the opmask register. In most embodiments, an opmask serving as a predicate operand obeys the following properties: 1) the instruction's operation is not performed for an element if the corresponding opmask bit is not set (this implies that no exception or violation can be caused by an operation on a masked-off element, and consequently, no exception flag is updated as a result of a masked-off operation); 2). a destination element is not updated with the result of the operation if the corresponding writemask bit is not set. Instead, the destination element value must be preserved (merging-masking) or it must be zeroed out (zeroing-masking); 3) for some instructions with a memory operand, memory faults are suppressed for elements with a mask bit of 0. Note that this feature provides a versatile construct to implement control-flow predication as the mask in effect provides a merging behavior for vector register destinations. As an alternative the masking can be used for zeroing instead of merging, so that the masked-out elements are updated with 0 instead of preserving the old value. The zeroing behavior is provided to remove the implicit dependency on the old value when it is not needed.

In embodiments, encodings of the instruction include a scale-index-base (SIB) type memory addressing operand that indirectly identifies multiple indexed destination locations in memory. In one embodiment, a SIB type memory operand may include an encoding identifying a base address register. The contents of the base address register may represent a base address in memory from which the addresses of the particular destination locations in memory are calculated. For example, the base address may be the address of the first location in a block of potential destination locations for an extended vector instruction. In one embodiment, a SIB type memory operand may include an encoding identifying an index register. Each element of the index register may specify an index or offset value usable to compute, from the base address, an address of a respective destination location within a block of potential destination locations. In one embodiment, a SIB type memory operand may include an encoding specifying a scaling factor to be applied to each index value when computing a respective destination address. For example, if a scaling factor value of four is encoded in the SIB type memory operand, each index value obtained from an element of the index register may be multiplied by four and then added to the base address to compute a destination address.

In one embodiment, a SIB type memory operand of the form vm32{x,y,z} may identify a vector array of memory operands specified using SIB type memory addressing. In this example, the array of memory addresses is specified using a common base register, a constant scaling factor, and a vector index register containing individual elements, each of which is a 32-bit index value. The vector index register may be a 128-bit register (e.g., XMM) register (vm32x), a 256-bit (e.g., YMM) register (vm32y), or a 512-bit (e.g., ZMM) register (vm32z). In another embodiment, a SIB type memory operand of the form vm64{x,y,z} may identify a vector array of memory operands specified using SIB type memory addressing. In this example, the array of memory addresses is specified using a common base register, a constant scaling factor, and a vector index register containing individual elements, each of which is a 64-bit index value. The vector index register may be a 128-bit register (e.g., XMM) register (vm64x), a 256-bit (e.g., YMM) register (vm64y) or a 512-bit (e.g., ZMM) register (vm64z).

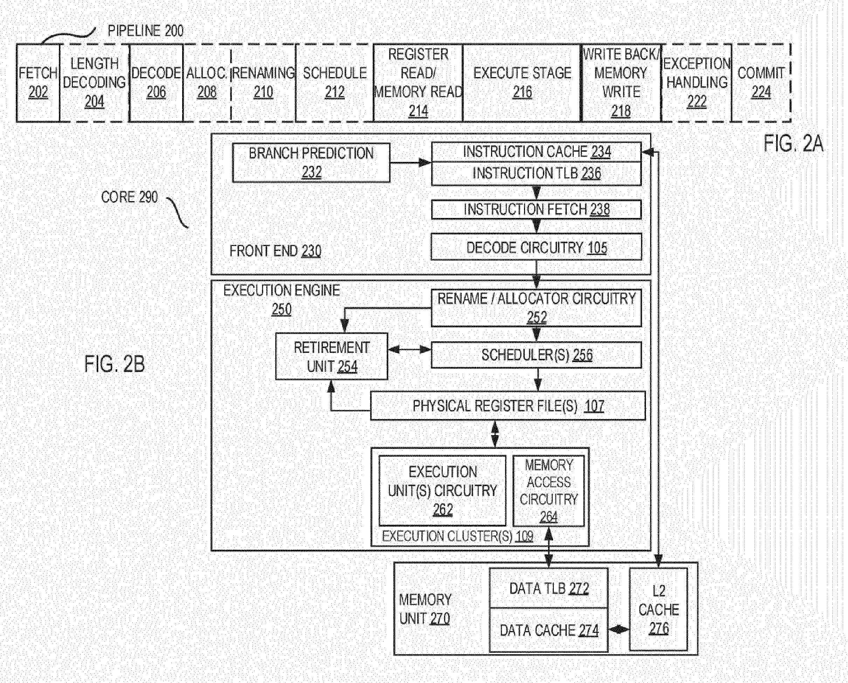

**FIG. 2A** is a block diagram illustrating both an exemplary in-order pipeline and an exemplary register renaming, out-of-order issue/execution pipeline according to embodiments of the invention. **FIG. 2B** is a block diagram illustrating both an exemplary embodiment of an in-order architecture core and an exemplary register renaming, out-of-order issue/execution architecture core to be included in a processor according to embodiments of the invention. The solid lined boxes in **FIGS. 2A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 2A****,** a processor pipeline 200 includes a fetch stage 202, a length decode stage 204, a decode stage 206, an allocation stage 208, a renaming stage 210, a scheduling (also known as a dispatch or issue) stage 212, a register read/memory read stage 214, an execute stage 216, a write back/memory write stage 218, an exception handling stage 222, and a commit stage 224.

**FIG. 2B** shows processor core 290 including a front-end unit 230 coupled to an execution engine unit 250, and both are coupled to a memory unit 270. The core 290 may be a reduced instruction set computing (RISC) core, a complex instruction set computing (CISC) core, a very long instruction word (VLIW) core, or a hybrid or alternative core type. As yet another option, the core 290 may be a special-purpose core, such as, for example, a network or communication core, compression engine, coprocessor core, general purpose computing graphics processing unit (GPGPU) core, graphics core, or the like.

The front end unit 230 includes a branch prediction unit 232 coupled to an instruction cache unit 234, which is coupled to an instruction translation lookaside buffer (TLB) 236, which is coupled to an instruction fetch unit 238, which is coupled to a decode unit 105. The decode unit 105 (or decoder) may decode instructions, and generate as an output one or more micro-operations, micro-code entry points, microinstructions, other instructions, or other control signals, which are decoded from, or which otherwise reflect, or are derived from, the original instructions. The decode unit 105 may be implemented using various different mechanisms. Examples of suitable mechanisms include, but are not limited to, look-up tables, hardware implementations, programmable logic arrays (PLAs), microcode read only memories (ROMs), etc. In one embodiment, the core 290 includes a microcode ROM or other medium that stores microcode for certain macroinstructions (e.g., in decode unit 105 or otherwise within the front-end unit 230). The decode unit 105 is coupled to a rename/allocator unit 252 in the execution engine unit 250.

The execution engine unit 250 includes the rename/allocator unit 252 coupled to a retirement unit 111 and a set of one or more scheduler unit(s) 256. The scheduler unit(s) 256 represents any number of different schedulers, including reservations stations, central instruction window, etc. The scheduler unit(s) 256 is coupled to the physical register file(s) unit(s) 107. Each of the physical register file(s) units 107 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 107 comprises a vector registers unit, a write mask registers unit, and a scalar registers unit. These register units may provide architectural vector registers, vector mask registers, and general-purpose registers. The physical register file(s) unit(s) 107 is overlapped by the retirement unit 111 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 111 and the physical register file(s) unit(s) 107 are coupled to the execution cluster(s) 109. The execution cluster(s) 109 includes a set of one or more execution units 262 and a set of one or more memory access units 264. The execution units 262 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 256, physical register file(s) unit(s) 107, and execution cluster(s) 109 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 264). It should also be understood that where separate pipelines are used, one or more of these pipelines may be out-of-order issue/execution and the rest in-order.

The set of memory access units 264 is coupled to the memory unit 270, which includes a data TLB unit 272 coupled to a data cache unit 274 coupled to a level 2 (L2) cache unit 276. In one exemplary embodiment, the memory access units 264 may include a load unit, a store address unit, and a store data unit, each of which is coupled to the data TLB unit 272 in the memory unit 270. The instruction cache unit 234 is further coupled to a level 2 (L2) cache unit 276 in the memory unit 270. The L2 cache unit 276 is coupled to one or more other levels of cache and eventually to a main memory.

By way of example, the exemplary register renaming, out-of-order issue/execution core architecture may implement the pipeline 200 as follows: 1) the instruction fetch 238 performs the fetch and length decoding stages 202 and 204; 2) the decode unit 105 performs the decode stage 206; 3) the rename/allocator unit 252 performs the allocation stage 208 and renaming stage 210; 4) the scheduler unit(s) 256 performs the schedule stage 212; 5) the physical register file(s) unit(s) 107 and the memory unit 270 perform the register read/memory read stage 214; the execution cluster 109 perform the execute stage 216; 6) the memory unit 270 and the physical register file(s) unit(s) 107 perform the write back/memory write stage 218; 7) various units may be involved in the exception handling stage 222; and 8) the retirement unit 111 and the physical register file(s) unit(s) 107 perform the commit stage 224.

The core 290 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 290 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 234/274 and a shared L2 cache unit 276, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

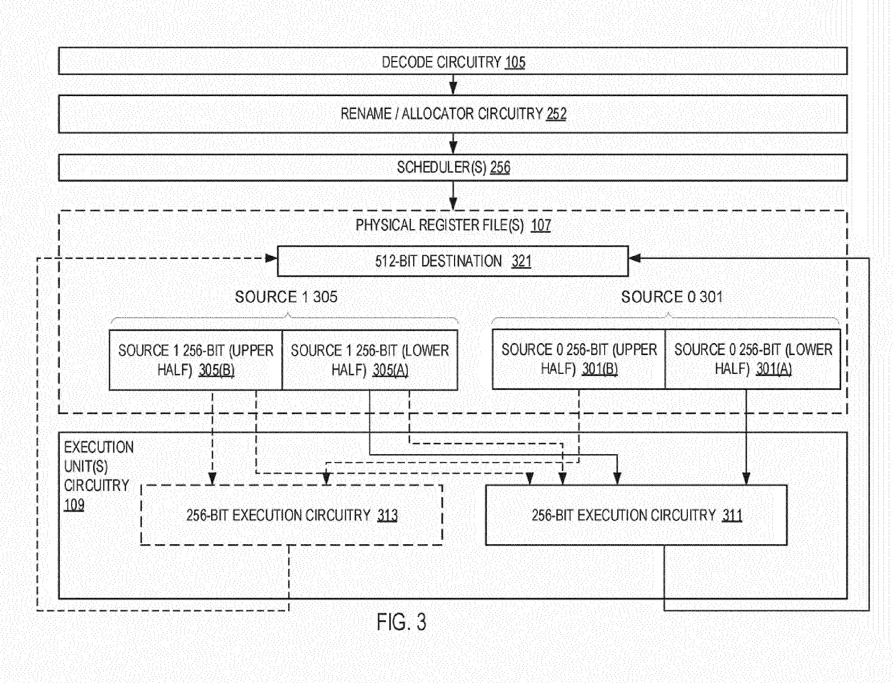

**FIG. 3** illustrates embodiments of a processor or core utilizing 512-bit operands with 256-bit execution circuitry. Embodiments that utilize this combination of a data width of 512-bits and execution resources that operate on 256-bits may allow for smaller changes to execution circuitry 262 that already has 256-bit execution resources than adding 512-bit execution resources. Processors or cores may use this configuration for arithmetic, Boolean, etc. operations.

In some embodiments, the decoder circuitry 105 maps 512-bit operations to the 256-bit execution circuitry hardware. For example, an ADD REG1, REG2, REG3 instruction (where the registers are all 512-bits) would not be decoded to simply use a 512-bit adder, but would be decoded to use at least two 256-bit adders. In some embodiments, microoperations are generated by the decoder circuitry 105 to reflect the use of 256-bit execution resources. Note that in some embodiments, an opcode of an instruction indicates usage of 512-bit operations. In some embodiments, one or more fields for an operand indicates usage of 512-bit operations (e.g., having a 512-bit register or memory location).

Similarly, the scheduler(s) 256 would schedule two 256-bit operations and not one 512-bit operation.

In this embodiment, there are two 512-bit source operands 301 and 305. These operands may be data from registers of register file(s) 107, data from memory, or a combination thereof. As shown, the source operands 301 and 305 logically comprise two halves with each half being 256-bits. For example, source 0 301 includes an upper-half 301(B) and a lower-half 301(A) and source 1 305 includes an upper-half 305(B) and a lower-half 305(A).

In some embodiments, corresponding halves of the sources 301 and 305 are operated on concurrently using at least two 256-bit execution circuits 311 and 313. For example, for ADD REG1, REG2, REG3, 256-bit execution circuit 311 adds data elements from REG2[0: 255] and REG3[0: 255] and 256-bit execution circuit 313 adds data elements from REG2[256: 511] and REG3[256: 511].

In other embodiments, corresponding halves of the sources 301 and 305 are operated on sequentially using at least two 256-bit execution circuits 311 and 313. For example, for ADD REG1, REG2, REG3, 256-bit execution circuit 311 adds data elements from REG2[0: 255] and REG3[0: 255] first and then adds data elements from REG2[256: 511] and REG3[256: 511].

The results from either execution approach are saved in the 512-bit destination 321. As two different writes are performed, this may be considered a double pump. Note that the destination 321 may also be one of the sources 301 or 305.

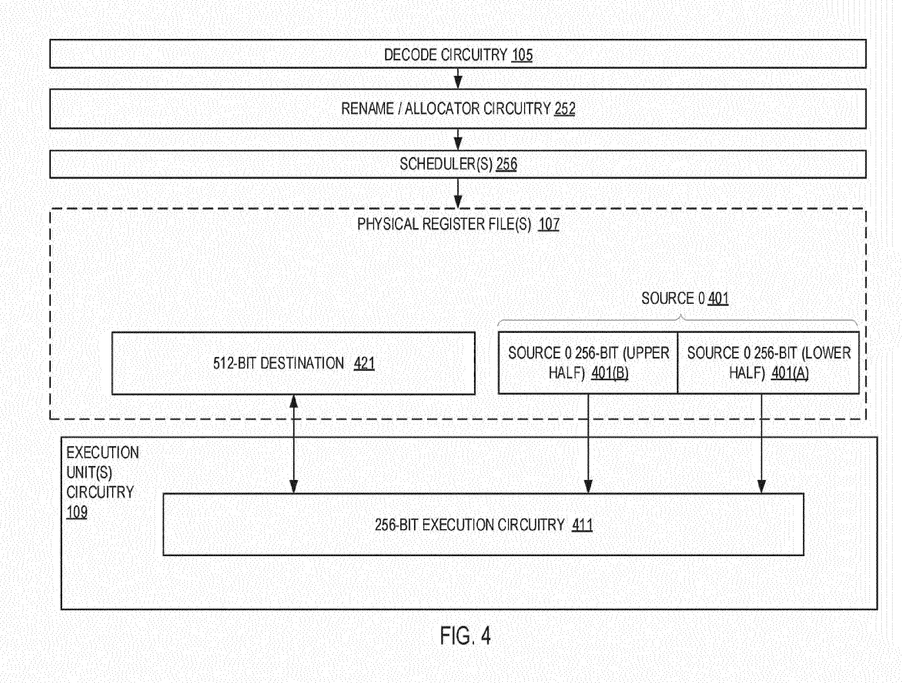

**FIG. 4** illustrates embodiments of a processor or core utilizing a single 512-bit operand with 256-bit execution circuitry. Embodiments that utilize this combination of a data width of 512-bits and execution resources that operate on 256-bits may allow for smaller changes to execution circuitry 262 that already has 256-bit execution resources than adding 512-bit execution resources. Not all instructions have two or more source operands. For example, shifts, rotates, single source permute, etc. typically only have one source operand and the destination may be the same source.

In some embodiments, the decoder circuitry 105 maps 512-bit operations to the 256-bit execution circuitry hardware. For example, a SHIFT REG1, REG2 instruction (where the registers are 512-bits) would not be decoded to simply use a 512-bit shifter, but would be decoded to use at least one 256-bit shifter. In some embodiments, microoperations are generated by the decoder circuitry 105 to reflect the use of 256-bit execution resources. Note that in some embodiments, an opcode of an instruction indicates usage of 512-bit operations. In some embodiments, one or more fields for an operand indicates usage of 512-bit operations (e.g., having a 512-bit register or memory location).

Similarly, the scheduler(s) 256 would schedule at least one 256-bit operation and not one 512-bit operation.

In this embodiment, the source operand 0 401 comprises two halves with each half being 256-bits. For example, source 0 401 includes an upper-half 401(B) and a lower-half 401(A). The operands may be data from registers of register file(s) 107, data from memory, or a combination thereof.

As shown, both halves 401(A) and (B) are operated on by the same 256-bit execution circuitry. One of the halves (e.g., lower-half 401(A)) is operated on first, the result of that operation stored in the 512-bit destination 421, and then the other half (e.g., upper-half 401(B) is operated on and the result of that operation is stored in the 512-bit destination 421. As two different writes are performed, this may be considered a double pump.

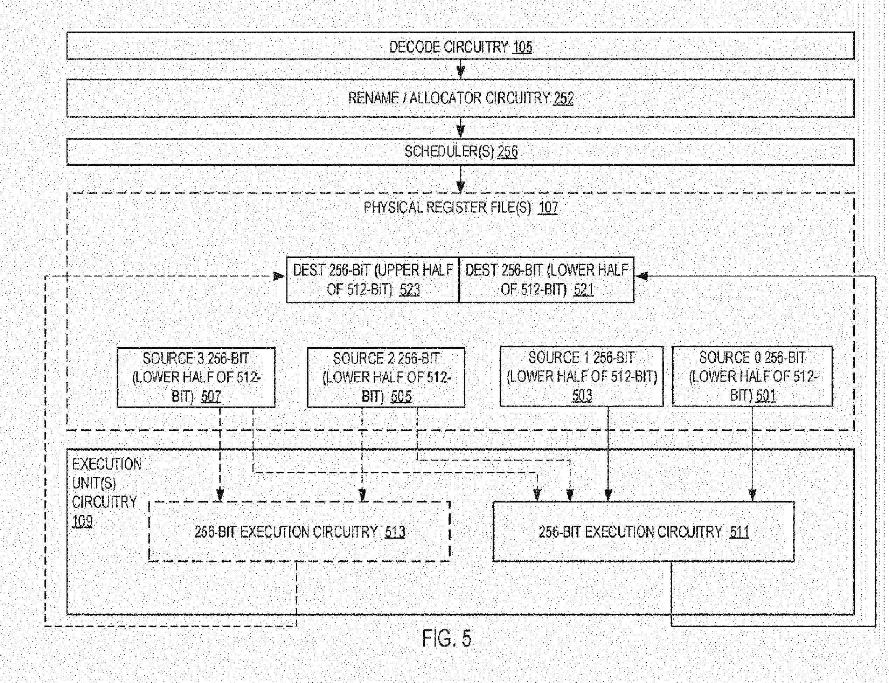

**FIG. 5** illustrates embodiments of a processor or core utilizing 256-bit operands with 256-bit execution circuitry to produce 512-bit results. Embodiments that utilize this combination of a data width of 256-bits and execution resources that operate on 256-bits may allow for smaller changes to execution circuitry 262 that already has 256-bit execution resources than adding 512-bit execution resources. Processors or cores may use this configuration for arithmetic, Boolean, etc. operations.

In some embodiments, the decoder circuitry 105 maps 256-bit operations to the 256-bit execution circuitry hardware for 512-bit operations. For example, an ADD REG1, REG2, REG3 instruction (where the registers are all 256-bits) would not be decoded to simply use a 512-bit adder, but would be decoded to use at least two 256-bit adders. In some embodiments, microoperations are generated by the decoder circuitry 105 to reflect the use of 256-bit execution resources. Note that in some embodiments, an opcode of an instruction indicates usage of 512-bit operations.

Similarly, the scheduler(s) 256 would schedule at least two 256-bit operations and not one 512-bit operation.

In this embodiment, there are four 256-bit source operands 501, 503, 505, and 507. These operands may be data from registers of register file(s) 107, data from memory, or a combination thereof. As shown, two source operands can be logically looked at to be halves of a 512-bit source. For example, source 0 501 may be a lower-half for a first 512-bit source and source 1 503 a lower-half of a second 512-bit source. Similarly, source 2 505 may be an upper-half for the first 512-bit source and source 3 507 an upper-half of the second 512-bit source.

In some embodiments, the corresponding halves of the sources 501-507 are operated on concurrently using at least two 256-bit execution circuits 511 and 513. For example, for ADD REG1, REG2, REG3, 256-bit execution circuit 511 adds data elements from REG2[0: 255] and REG3[0: 255] and 256-bit execution circuit 513 adds data elements from REG2[256: 511] and REG3[256: 511].

In other embodiments, corresponding halves of the sources 501-507 are operated on sequentially using at least two 256-bit execution circuits 511 and 513. For example, for ADD REG1, REG2, REG3, 256-bit execution circuit 511 adds data elements from REG2[0: 255] and REG3[0: 255] first and then adds data elements from REG2[256: 511] and REG3[256: 511].

The results from either execution approach are saved into two 256-bit destinations 521 and 523. As two different writes are performed, this may be considered a double pump. Note that the destinations 521 and DD23 may also be one of the sources 501-507.

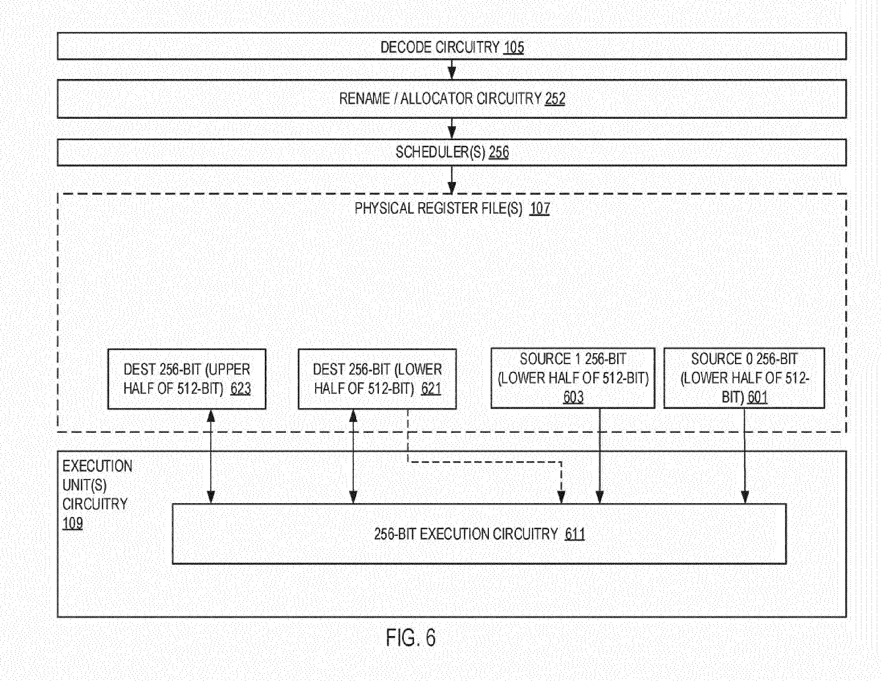

**FIG. 6** illustrates embodiments of a processor or core utilizing a single 512-bit operand with 256-bit execution circuitry. Embodiments that utilize this combination of a data width of 256-bits and execution resources that operate on 256-bits may allow for smaller changes to execution circuitry 262 that already has 256-bit execution resources than adding 512-bit execution resources. Not all instructions have two or more source operands. For example, shifts, rotates, single source permute, etc. typically only have one source operand and the destination may be the same source.

In some embodiments, the decoder circuitry 105 maps 512-bit operations to the 256-bit execution circuitry hardware. For example, a SHIFT REG1, REG2 instruction (where the registers are 256-bits) would not be decoded to simply use a 512-bit shifter, but would be decoded to use at least one 256-bit shifter. In some embodiments, microoperations are generated by the decoder circuitry 105 to reflect the use of 256-bit execution resources. Note that in some embodiments, an opcode of an instruction indicates usage of 512-bit operations. Similarly, the scheduler(s) 256 would schedule at least one 256-bit operation and not one 512-bit operation.

As shown, two source operands can be logically looked at to be halves of a 512-bit source. For example, source 0 601 may be a lower-half for a 512-bit source and source 1 603 a lower-half of a second 512-bit source. The operands may be data from registers of register file(s) 107, data from memory, or a combination thereof.

As shown, both halves 601 and 603 are operated on by the same 256-bit execution circuitry. One of the halves (e.g., lower-half 601) is operated on first, the result of that operation stored in at least 256-bit destination 621, and then the other half (e.g., upper-half 603) is operated on and the result of that operation is stored in at least 256-bit destination 621. As two different writes are performed, this may be considered a double pump.

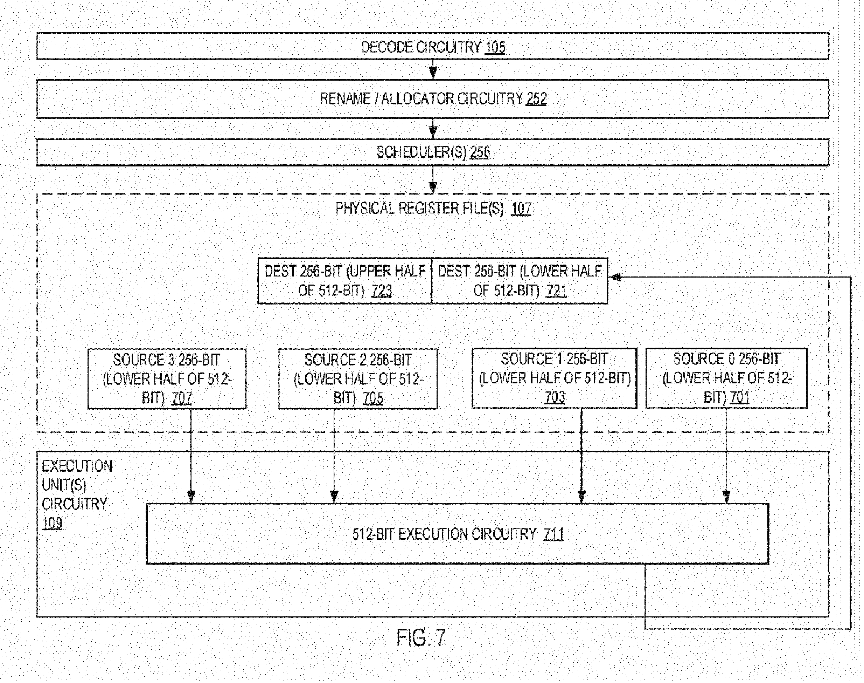

**FIG. 7** illustrates embodiments of a processor or core utilizing a single 512-bit operand with 512-bit execution circuitry. Embodiments that utilize this combination of a data width of 256-bits and execution resources that operate on 512-bits allow for not adding 512-registers. Not all instructions have two or more source operands. For example, shifts, rotates, single source permute, etc. typically only have one source operand and the destination may be the same source.

In some embodiments, the decoder circuitry 105 maps the-bit operations to the 512-bit execution circuitry hardware. For example, an ADD REG1, REG2, REG3 instruction (where the registers are logically 512-bits) would be decoded to use a 512-bit adder. Note that the REG of the instruction may be a mapping of two 256-bit registers to a 512-bit equivalent. For example, REG2 is 256-bit register number 1 and 256-bit register number 0. In some embodiments, this mapping is made explicit (e.g., REG2[YMM0,YMM1]). As such, each "512-bit" operand has at least two underlying registers and/or memory locations explicitly encoded. In some embodiments, this mapping is not made explicit, but inferred (e.g., REG2 = YMM2 and YMM3). As such, each "512-bit" operand has at least two underlying registers and/or memory locations implicitly detailed.

In some embodiments, microoperations are generated by the decoder circuitry 105 to reflect the use of 512-bit execution resources. Note that in some embodiments, an opcode of an instruction indicates usage of 512-bit operations. Similarly, the scheduler(s) 256 would schedule one 512-bit operation and not multiple 256-bit operations.

As shown, two 256-bit source operands can be logically looked at to be halves of a 512-bit source. For example, source 0 701 may be a lower-half for a 512-bit source and source 1 703 a lower-half of a second 512-bit source. The operands may be data from registers of register file(s) 107, data from memory, or a combination thereof.

As shown, both halves 701 and 703 are operated on by the 512-bit execution circuitry 711 as if they were a single 512-bit source. A result of the 512-bit operation is stored into two 256-bit destinations 721 and 723 which represent lower- and upper-halves of a 512-bit destination.

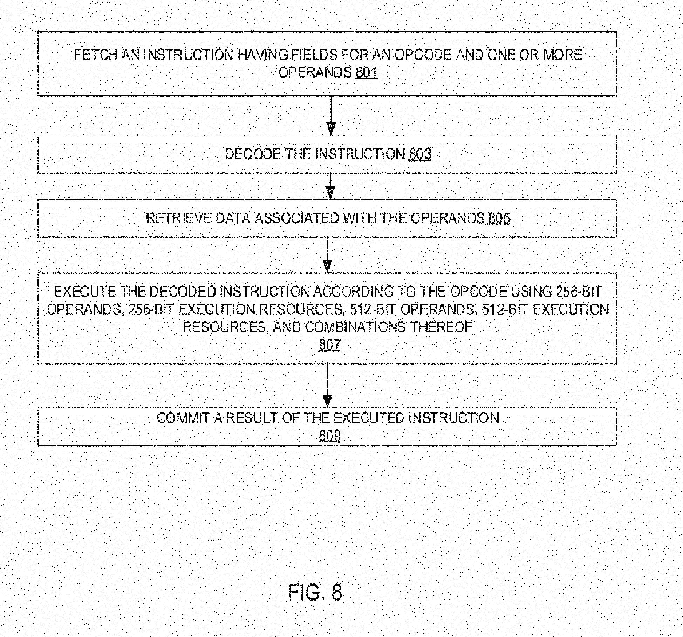

**FIG. 8** illustrates an embodiment of method performed by a processor to process a "512-bit" instruction. For example, a processor core as shown in FIG. 1, a pipeline as detailed below, etc. performs this method.

At 801, a "512-bit" instruction is fetched. Depending upon the instruction it will at least include fields for an opcode, an identifier of at least a first source operand location (e.g., a register), and an identifier of a destination operand location. As noted above, the operands may be 256-bit or 512-bit depending upon the implementation. In some embodiments, the instruction further includes a field for a writemask. In some embodiments, the instruction is fetched from an instruction cache.

The fetched instruction is decoded at 803. For example, the fetched is decoded by decode circuitry such as that detailed herein.

Data values associated with the source operands of the decoded instruction are retrieved at 805 and the operations of instruction are scheduled. For example, when one or more of the source operands are memory operands, the data from the indicated memory location is retrieved.

At 807, the decoded instruction is executed by execution circuitry (hardware) according to the opcode. Depending upon the opcode, operand sizes, etc. the execution may use 256-bit operands, 256-bit execution resources, 512-bit operands, 512-bit execution resources, and combinations thereof.

In some embodiments, the instruction is committed or retired at RR09.

The figures below detail exemplary architectures and systems to implement embodiments of the above. In some embodiments, one or more hardware components and/or instructions described above are emulated as detailed below, or implemented as software modules.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

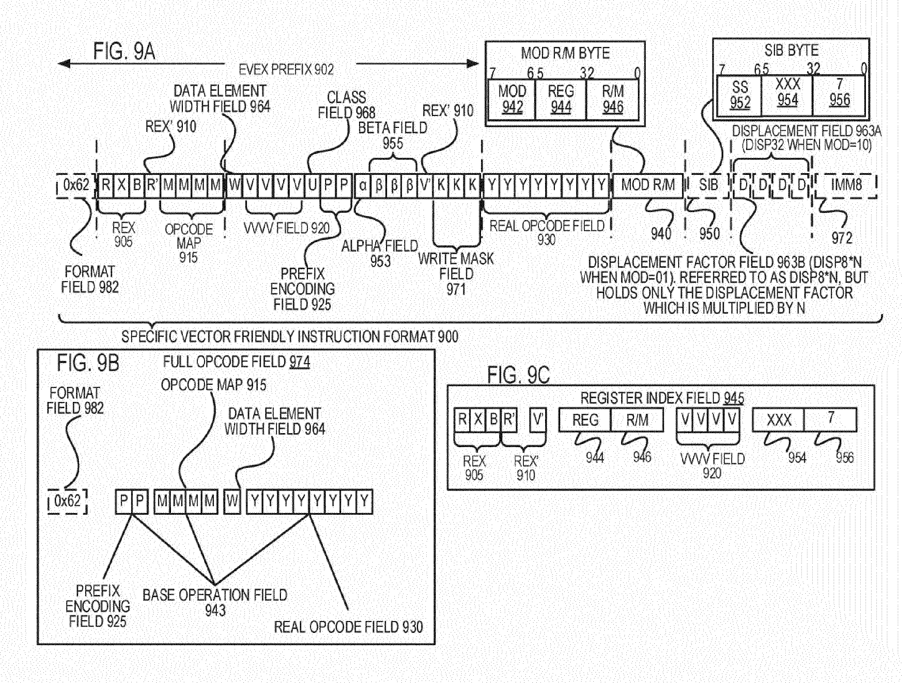

**FIG. 9A** is a block diagram illustrating an exemplary instruction format according to embodiments of the invention. **FIG. 9A** shows an instruction format 900 that is specific in the sense that it specifies the location, size, interpretation, and order of the fields, as well as values for some of those fields. The instruction format 900 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions.

EVEX Prefix (Bytes 0-3) 902 - is encoded in a four-byte form.

Format Field 982 (EVEX Byte 0, bits [7:0]) - the first byte (EVEX Byte 0) is the format field 982 and it contains 0x62 (the unique value used for distinguishing the vector friendly instruction format in one embodiment of the invention).

The second-fourth bytes (EVEX Bytes 1-3) include a number of bit fields providing specific capability.

REX field 905 (EVEX Byte 1, bits [7-5]) - consists of a EVEX.R bit field (EVEX Byte 1, bit [7] - R), EVEX.X bit field (EVEX byte 1, bit [6] - X), and 957BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 910 - this is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 915 (EVEX byte 1, bits [3:0] - mmmm) - its content encodes an implied leading opcode byte (0F, 0F 38, or 0F 3).

Data element width field 964 (EVEX byte 2, bit [7] - W) - is represented by the notation EVEX.W. EVEX.W is used to define the granularity (size) of the datatype (either 32-bit data elements or 64-bit data elements). This field is optional in the sense that it is not needed if only one data element width is supported and/or data element widths are supported using some aspect of the opcodes.

EVEX.vvvv 920 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 920 encodes the 4 low-order bits of the first source register specifier stored in inverted (1s complement) form. Depending on the instruction, an extra different EVEX bit field is used to extend the specifier size to 32 registers.

EVEX.U 968 Class field (EVEX byte 2, bit [2]-U) - If EVEX.U = 0, it indicates class A (support merging-writemasking) or EVEX.U0; if EVEX.U = 1, it indicates class B (support zeroing and merging-writemasking)or EVEX.U1.

Prefix encoding field 925 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 953 (EVEX byte 3, bit [7] - EH; also known as EVEX.EH, EVEX.rs, EVEX.RL, EVEX.writemask control, and EVEX.N; also illustrated with α) - its content content distinguishes which one of the different augmentation operation types are to be performed.

Beta field 955 (EVEX byte 3, bits [6:4]-SSS, also known as EVEX.s₂₋₀, EVEX.r₂₋₀, EVEX.rr1, EVEX.LL0, EVEX.LLB; also illustrated with βββ) - dinstinguishes which of the operations of a specified type are to be performed.

REX' field 910 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Writemask field 971 (EVEX byte 3, bits [2:0]-kkk) - its content specifies the index of a register in the writemask registers. In one embodiment of the invention, the specific value EVEX.kkk=000 has a special behavior implying no writemask is used for the particular instruction (this may be implemented in a variety of ways including the use of a writemask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the writemask field 971 allows for partial vector operations, including loads, stores, arithmetic, logical, etc. While embodiments of the invention are described in which the writemask field's 971 content selects one of a number of writemask registers that contains the writemask to be used (and thus the writemask field's 971 content indirectly identifies that masking to be performed), alternative embodiments instead or additional allow the mask write field's 971 content to directly specify the masking to be performed.

Real Opcode Field 930 (Byte 4) is also known as the opcode byte. Part of the opcode is specified in this field.

MOD R/M Field 940 (Byte 5) includes MOD field 942, register index field 944, and R/M field 946. The MOD field's 942 content distinguishes between memory access and non-memory access operations. The role of register index field 944 can be summarized to two situations: encoding either the destination register operand or a source register operand, or be treated as an opcode extension and not used to encode any instruction operand. The content of register index field 944, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

The role of R/M field 946 may include the following: encoding the instruction operand that references a memory address, or encoding either the destination register operand or a source register operand.

Scale, Index, Base (SIB) Byte (Byte 6) - The scale field's 950 content allows for the scaling of the index field's content for memory address generation (e.g., for address generation that uses 2^{scale ∗} index + base). SIB.xxx 954 and SIB.bbb 956 - the contents of these fields have been previously referred to with regard to the register indexes Xxxx and Bbbb.

Displacement field 963A (Bytes 7-10) - when MOD field 942 contains 10, bytes 7-10 are the displacement field 963A, and it works the same as the legacy 32-bit displacement (disp32) and works at byte granularity. This may be used as part of memory address generation (e.g., for address generation that uses 2^{scale ∗} index + base + displacement).

Displacement factor field 963B (Byte 7) - when MOD field 942 contains 01, byte 7 is the displacement factor field 963B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 963B is a reinterpretation of disp8; when using displacement factor field 963B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 963B substitutes the legacy x86 instruction set 8-bit displacement. Thus, the displacement factor field 963B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 972 allows for the specification of an immediate. This field is optional in the sense that is it not present in an implementation of the generic vector friendly format that does not support immediate and it is not present in instructions that do not use an immediate.

### Full Opcode Field

**FIG. 9B** is a block diagram illustrating the fields of the instruction format 900 that make up the full opcode field 974 according to one embodiment of the invention. Specifically, the full opcode field 974 includes the format field 982, the base operation field 943, and the data element width (W) field 963. The base operation field 943 includes the prefix encoding field 925, the opcode map field 915, and the real opcode field 930.

### Register Index Field

**FIG. 9C** is a block diagram illustrating the fields of the format 900 that make up the register index field 945 according to one embodiment of the invention. Specifically, the register index field 945 includes the REX field 905, the REX' field 910, the MODR/M.reg field 944, the MODR/M.r/m field 946, the VVVV field 920, xxx field 954, and the bbb field 956.

### Augmentation Operation Field

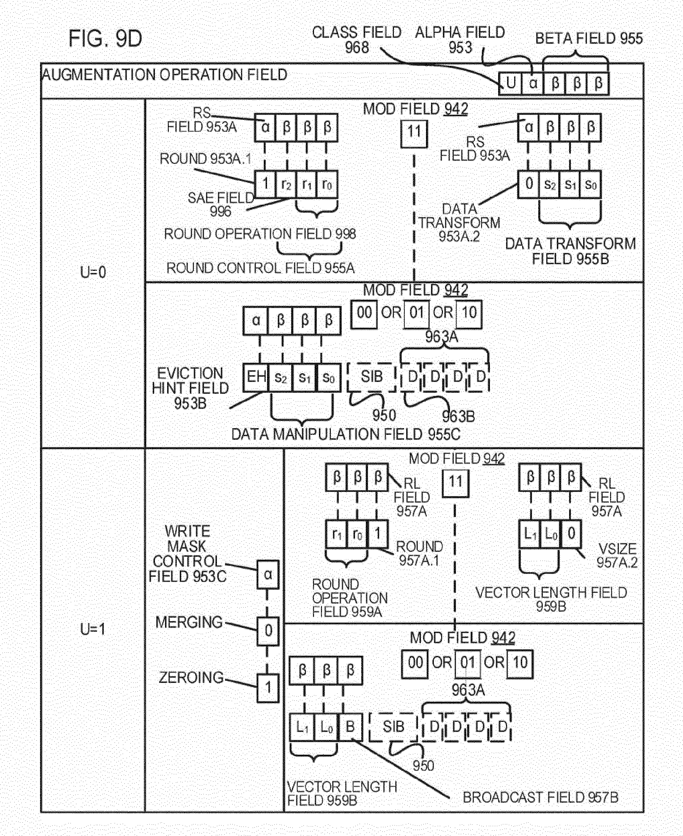

**FIG. 9D** is a block diagram illustrating the fields of the instruction format 900 that make up an augmentation operation field according to one embodiment of the invention. When the class (U) field 968 contains 0, it signifies EVEX.U0 (class A 968A); when it contains 1, it signifies EVEX.U1 (class B 968B). When U=0 and the MOD field 942 contains 11 (signifying a no memory access operation), the alpha field 953 (EVEX byte 3, bit [7] - EH) is interpreted as the rs field 953A. When the rs field 953A contains a 1 (round 953A.1), the beta field 955 (EVEX byte 3, bits [6:4]- SSS) is interpreted as the round control field 955A. The round control field 955A includes a one bit SAE field 996 and a two bit round operation field 998. When the rs field 953A contains a 0 (data transform 953A.2), the beta field 955 (EVEX byte 3, bits [6:4]- SSS) is interpreted as a three bit data transform field 955B. When U=0 and the MOD field 942 contains 00, 01, or 10 (signifying a memory access operation), the alpha field 953 (EVEX byte 3, bit [7] - EH) is interpreted as the eviction hint (EH) field 953B and the beta field 955 (EVEX byte 3, bits [6:4]- SSS) is interpreted as a three bit data manipulation field 955C.

When U=1, the alpha field 953 (EVEX byte 3, bit [7] - EH) is interpreted as the writemask control (Z) field 953C. When U=1 and the MOD field 942 contains 11 (signifying a no memory access operation), part of the beta field 955 (EVEX byte 3, bit [4]- So) is interpreted as the RL field 957A; when it contains a 1 (round 957A.1) the rest of the beta field 955 (EVEX byte 3, bit [6-5]- S₂₋₁) is interpreted as the round operation field 959A, while when the RL field 957A contains a 0 (VSIZE 957.A2) the rest of the beta field 955 (EVEX byte 3, bit [6-5]- S₂₋₁) is interpreted as the vector length field 959B (EVEX byte 3, bit [6-5]- L₁₋₀). When U=1 and the MOD field 942 contains 00, 01, or 10 (signifying a memory access operation), the beta field 955 (EVEX byte 3, bits [6:4]- SSS) is interpreted as the vector length field 959B (EVEX byte 3, bit [6-5]- L₁₋₀) and the broadcast field 957B (EVEX byte 3, bit [4]- B).

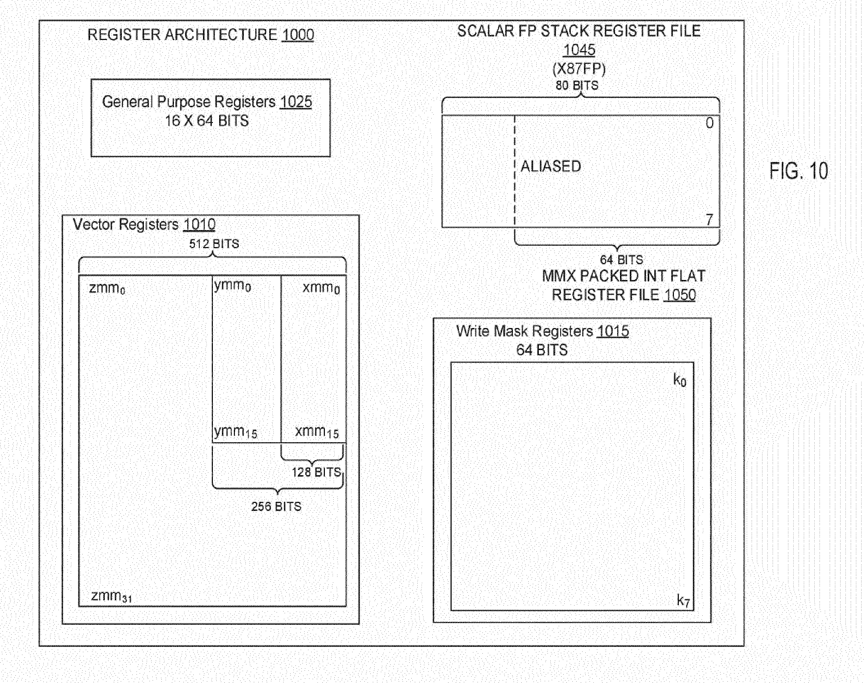

**FIG. 10** is a block diagram of a register architecture 1000 according to one embodiment of the invention. In the embodiment illustrated, there are 32 vector registers 1010 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15.

Write mask registers 1015 - in the embodiment illustrated, there are 8 write mask registers (k0 through k7), each 64 bits in size. In an alternate embodiment, the write mask registers 1015 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1025 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1045, on which is aliased the MMX packed integer flat register file 1050 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Specific Exemplary In-Order Core Architecture

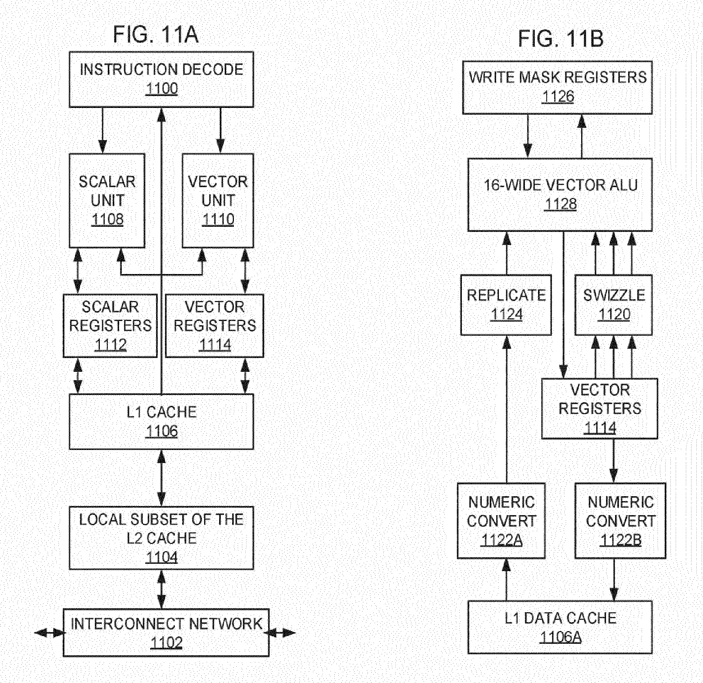

**FIGS. 11A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**FIG. 11A** is a block diagram of a single processor core, along with its connection to the on-die interconnect network 1102 and with its local subset of the Level 2 (L2) cache 1104, according to embodiments of the invention. In one embodiment, an instruction decoder 1100 supports the x86 instruction set with a packed data instruction set extension. An L1 cache 1106 allows low-latency accesses to cache memory into the scalar and vector units. While in one embodiment (to simplify the design), a scalar unit 1108 and a vector unit 1110 use separate register sets (respectively, scalar registers 1112 and vector registers 1114) and data transferred between them is written to memory and then read back in from a level 1 (L1) cache 1106, alternative embodiments of the invention may use a different approach (e.g., use a single register set or include a communication path that allow data to be transferred between the two register files without being written and read back).

The local subset of the L2 cache 1104 is part of a global L2 cache that is divided into separate local subsets, one per processor core. Each processor core has a direct access path to its own local subset of the L2 cache 1104. Data read by a processor core is stored in its L2 cache subset 1104 and can be accessed quickly, in parallel with other processor cores accessing their own local L2 cache subsets. Data written by a processor core is stored in its own L2 cache subset 1104 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**FIG. 11B** is an expanded view of part of the processor core in **FIG. 11A** according to embodiments of the invention. **FIG. 11B** includes an L1 data cache 1106A part of the L1 cache 1104, as well as more detail regarding the vector unit 1110 and the vector registers 1114. Specifically, the vector unit 1110 is a 16-wide vector processing unit (VPU) (see the 16-wide ALU 1128), which executes one or more of integer, single-precision float, and double-precision float instructions. The VPU supports swizzling the register inputs with swizzle unit 1120, numeric conversion with numeric convert units 1122A-B, and replication with replication unit 1124 on the memory input. Write mask registers 1126 allow predicating resulting vector writes.

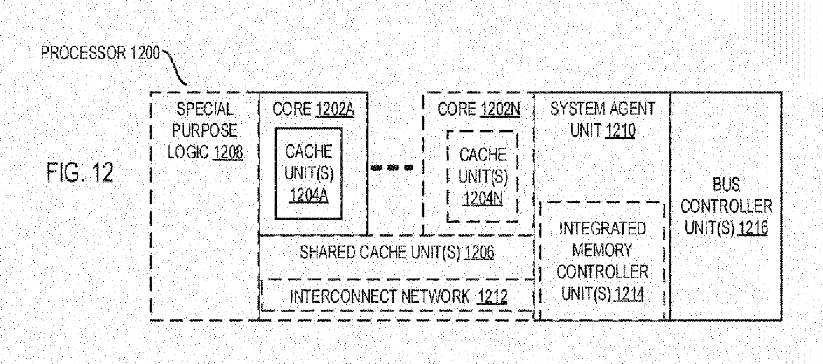

**FIG. 12** is a block diagram of a processor 1200 that may have more than one core, may have an integrated memory controller, and may have integrated graphics according to embodiments of the invention. The solid lined boxes in **FIG. 12** illustrate a processor 1200 with a single core 1202A, a system agent 1210, a set of one or more bus controller units 1216, while the optional addition of the dashed lined boxes illustrates an alternative processor 1200 with multiple cores 1202A-N, a set of one or more integrated memory controller unit(s) 1214 in the system agent unit 1210, and special purpose logic 1208.

Thus, different implementations of the processor 1200 may include: 1) a CPU with the special purpose logic 1208 being integrated graphics and/or scientific (throughput) logic (which may include one or more cores), and the cores 1202A-N being one or more general purpose cores (e.g., general purpose in-order cores, general purpose out-of-order cores, a combination of the two); 2) a coprocessor with the cores 1202A-N being a large number of special purpose cores intended primarily for graphics and/or scientific (throughput); and 3) a coprocessor with the cores 1202A-N being a large number of general purpose in-order cores. Thus, the processor 1200 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1200 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1206, and external memory (not shown) coupled to the set of integrated memory controller units 1214. The set of shared cache units 1206 may include one or more mid-level caches, such as level 2 (L2), level 3 (L3), level 4 (L4), or other levels of cache, a last level cache (LLC), and/or combinations thereof. While in one embodiment a ring based interconnect unit 1212 interconnects the integrated graphics logic 1208 (integrated graphics logic 1208 is an example of and is also referred to herein as special purpose logic), the set of shared cache units 1206, and the system agent unit 1210/integrated memory controller unit(s) 1214, alternative embodiments may use any number of well-known techniques for interconnecting such units. In one embodiment, coherency is maintained between one or more cache units 1206 and cores 1202-A-N.

In some embodiments, one or more of the cores 1202A-N are capable of multithreading. The system agent 1210 includes those components coordinating and operating cores 1202A-N. The system agent unit 1210 may include for example a power control unit (PCU) and a display unit. The PCU may be or include logic and components needed for regulating the power state of the cores 1202A-N and the integrated graphics logic 1208. The display unit is for driving one or more externally connected displays.

The cores 1202A-N may be homogenous or heterogeneous in terms of architecture instruction set; that is, two or more of the cores 1202A-N may be capable of execution the same instruction set, while others may be capable of executing only a subset of that instruction set or a different instruction set.

### Exemplary Computer Architectures

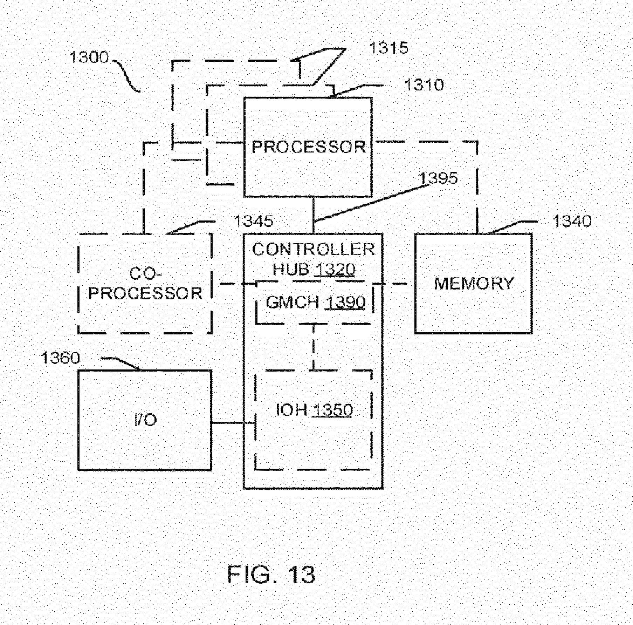

**FIGS. 13-16** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 13, shown is a block diagram of a system 1300 in accordance with one embodiment of the present invention. The system 1300 may include one or more processors 1310, 1315, which are coupled to a controller hub 1320. In one embodiment the controller hub 1320 includes a graphics memory controller hub (GMCH) 1390 and an Input/Output Hub (IOH) 1350 (which may be on separate chips); the GMCH 1390 includes memory and graphics controllers to which are coupled memory 1340 and a coprocessor 1345; the IOH 1350 couples input/output (I/O) devices 1360 to the GMCH 1390. Alternatively, one or both of the memory and graphics controllers are integrated within the processor (as described herein), the memory 1340 and the coprocessor 1345 are coupled directly to the processor 1310, and the controller hub 1320 in a single chip with the IOH 1350.

The optional nature of additional processors 1315 is denoted in FIG. 13 with broken lines. Each processor 1310, 1315 may include one or more of the processing cores described herein and may be some version of the processor 1200.

The memory 1340 may be, for example, dynamic random-access memory (DRAM), phase change memory (PCM), or a combination of the two. For at least one embodiment, the controller hub 1320 communicates with the processor(s) 1310, 1315 via a multi-drop bus, such as a frontside bus (FSB), point-to-point interface such as QuickPath Interconnect (QPI), or similar connection 1395.

In one embodiment, the coprocessor 1345 is a special-purpose processor, such as, for example, a high-throughput MIC processor, a network or communication processor, compression engine, graphics processor, GPGPU, embedded processor, or the like. In one embodiment, controller hub 1320 may include an integrated graphics accelerator.

There can be a variety of differences between the physical resources 1310, 1315 in terms of a spectrum of metrics of merit including architectural, microarchitectural, thermal, power consumption characteristics, and the like.

In one embodiment, the processor 1310 executes instructions that control data processing operations of a general type. Embedded within the instructions may be coprocessor instructions. The processor 1310 recognizes these coprocessor instructions as being of a type that should be executed by the attached coprocessor 1345. Accordingly, the processor 1310 issues these coprocessor instructions (or control signals representing coprocessor instructions) on a coprocessor bus or other interconnect, to coprocessor 1345. Coprocessor(s) 1345 accept and execute the received coprocessor instructions.

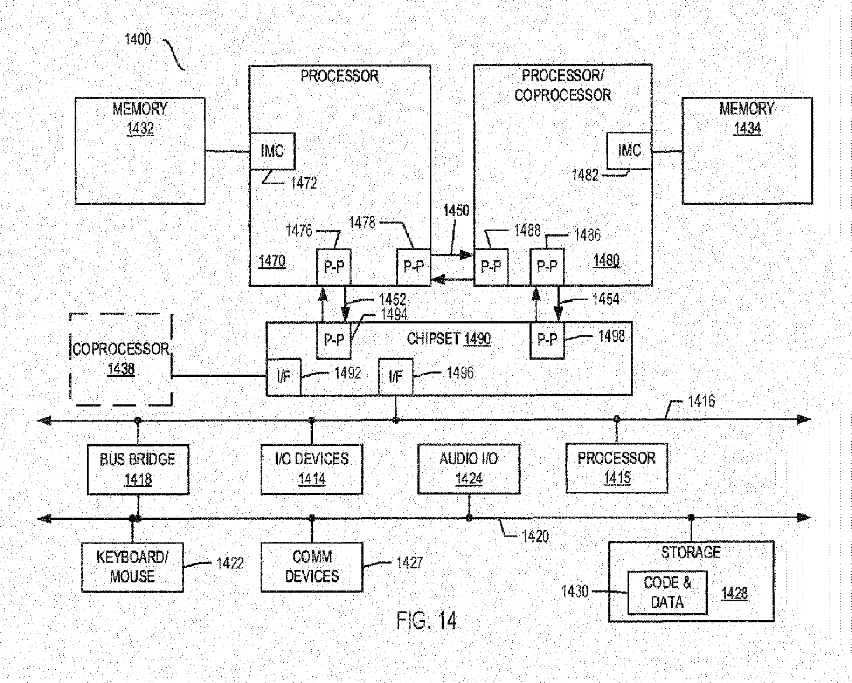

Referring now to **FIG. 14****,** shown is a block diagram of a first more specific exemplary system 1400 in accordance with an embodiment of the present invention. As shown in **FIG. 14****,** multiprocessor system 1400 is a point-to-point interconnect system, and includes a first processor 1470 and a second processor 1480 coupled via a point-to-point interconnect 1450. Each of processors 1470 and 1480 may be some version of the processor 1200. In one embodiment of the invention, processors 1470 and 1480 are respectively processors 1310 and 1315, while coprocessor 1438 is coprocessor 1345. In another embodiment, processors 1470 and 1480 are respectively processor 1310 coprocessor 1345.

Processors 1470 and 1480 are shown including integrated memory controller (IMC) units 1472 and 1482, respectively. Processor 1470 also includes as part of its bus controller units point-to-point (P-P) interfaces 1476 and 1478; similarly, second processor 1480 includes P-P interfaces 1486 and 1488. Processors 1470, 1480 may exchange information via a point-to-point (P-P) interface 1450 using P-P interface circuits 1478, 1488. As shown in **FIG. 14****,** IMCs 1472 and 1482 couple the processors to respective memories, namely a memory 1432 and a memory 1434, which may be portions of main memory locally attached to the respective processors.

Processors 1470, 1480 may each exchange information with a chipset 1490 via individual P-P interfaces 1452, 1454 using point to point interface circuits 1476, 1494, 1486, 1498. Chipset 1490 may optionally exchange information with the coprocessor 1438 via a high-performance interface 1492. In one embodiment, the coprocessor 1438 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1490 may be coupled to a first bus 1416 via an interface 1496. In one embodiment, first bus 1416 may be a Peripheral Component Interconnect (PCI) bus, or a bus such as a PCI Express bus or another third generation I/O interconnect bus, although the scope of the present invention is not so limited.

As shown in **FIG. 14****,** various I/O devices 1414 may be coupled to first bus 1416, along with a bus bridge 1418 which couples first bus 1416 to a second bus 1420. In one embodiment, one or more additional processor(s) 1415, such as coprocessors, high-throughput MIC processors, GPGPU's, accelerators (such as, e.g., graphics accelerators or digital signal processing (DSP) units), field programmable gate arrays, or any other processor, are coupled to first bus 1416. In one embodiment, second bus 1420 may be a low pin count (LPC) bus. Various devices may be coupled to a second bus 1420 including, for example, a keyboard and/or mouse 1422, communication devices 1427 and a storage unit 1428 such as a disk drive or other mass storage device which may include instructions/code and data 1430, in one embodiment. Further, an audio I/O 1424 may be coupled to the second bus 1420. Note that other architectures are possible. For example, instead of the point-to-point architecture of **FIG. 14****,** a system may implement a multi-drop bus or other such architecture.

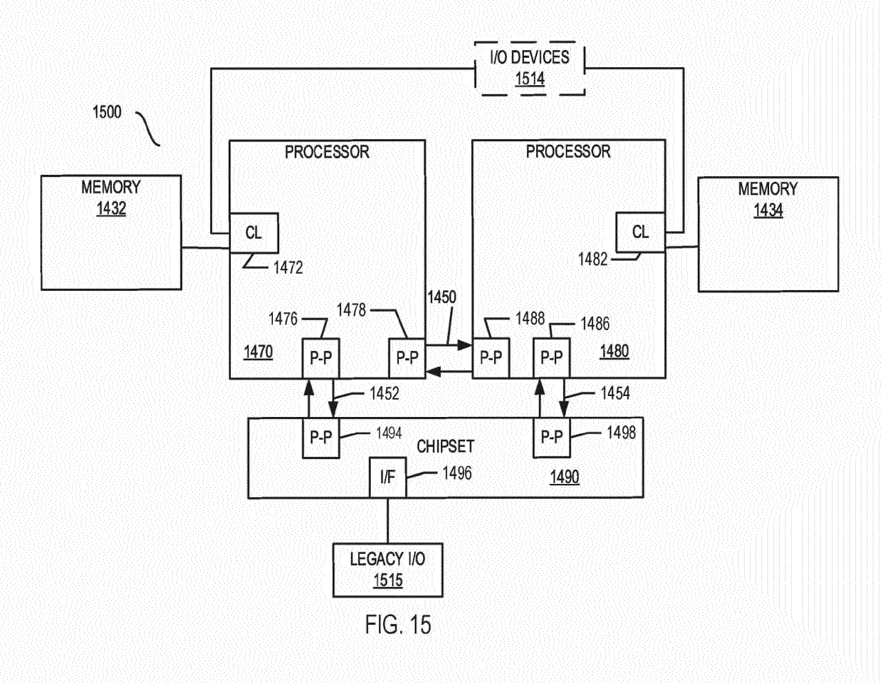

Referring now to **FIG. 15****,** shown is a block diagram of a second more specific exemplary system 1500 in accordance with an embodiment of the present invention. Like elements in **FIGS. 14** **and** **15** bear like reference numerals, and certain aspects of **FIG. 14** have been omitted from **FIG. 15** in order to avoid obscuring other aspects of **FIG. 15****.**

**FIG. 15** illustrates that the processors 1470, 1480 may include integrated memory and I/O control logic ("CL") 1472 and 1482, respectively. Thus, the CL 1472, 1482 include integrated memory controller units and include I/O control logic. **FIG. 15** illustrates that not only are the memories 1432, 1434 coupled to the CL 1472, 1482, but also that I/O devices 1514 are also coupled to the control logic 1472, 1482. Legacy I/O devices 1515 are coupled to the chipset 1490.

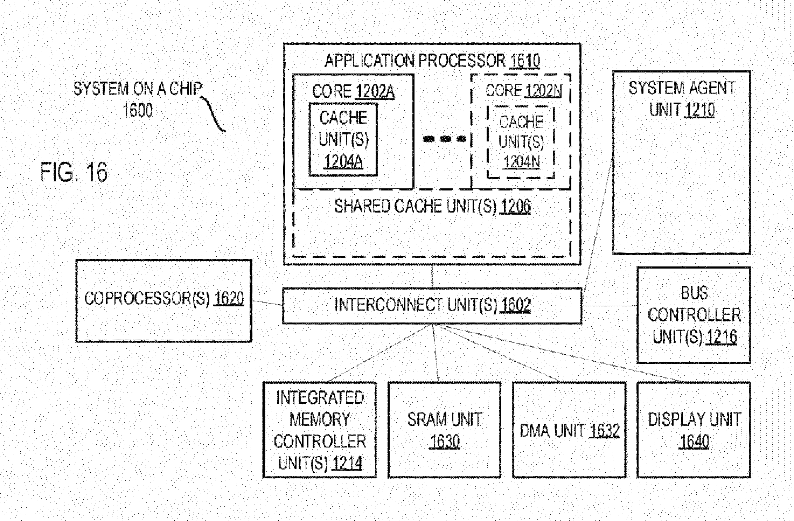

Referring now to **FIG. 16****,** shown is a block diagram of a SoC 1600 in accordance with an embodiment of the present invention. Similar elements in **FIG. 12** bear like reference numerals. Also, dashed lined boxes are optional features on more advanced SoCs. In **FIG. 16****,** an interconnect unit(s) 1602 is coupled to: an application processor 1610 which includes a set of one or more cores 1202A-N, which include cache units 1204A-N, and shared cache unit(s) 1206; a system agent unit 1210; a bus controller unit(s) 1216; an integrated memory controller unit(s) 1214; a set or one or more coprocessors 1620 which may include integrated graphics logic, an image processor, an audio processor, and a video processor; an static random access memory (SRAM) unit 1630; a direct memory access (DMA) unit 1632; and a display unit 1640 for coupling to one or more external displays. In one embodiment, the coprocessor(s) 1620 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1430 illustrated in **FIG. 14****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

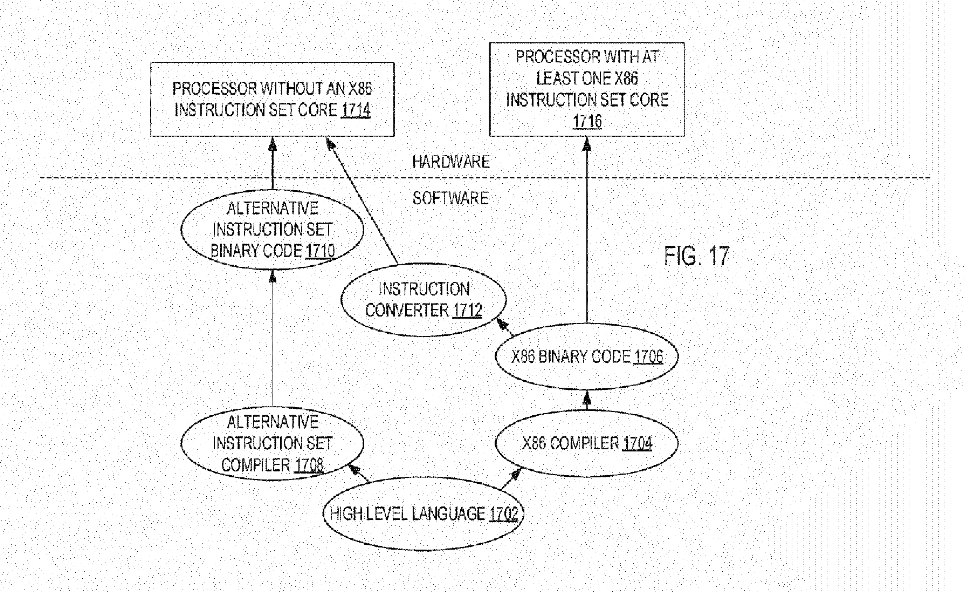

**FIG. 17** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **FIG. 17** shows a program in a high-level language 1702 may be compiled using an x86 compiler 1704 to generate x86 binary code 1706 that may be natively executed by a processor with at least one x86 instruction set core 1716. The processor with at least one x86 instruction set core 1716 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1704 represents a compiler that is operable to generate x86 binary code 1706 (e.g., object code) that can, with or without additional linkage processing, be executed on the processor with at least one x86 instruction set core 1716. Similarly, **FIG. 17** shows the program in the high level language 1702 may be compiled using an alternative instruction set compiler 1708 to generate alternative instruction set binary code 1710 that may be natively executed by a processor without at least one x86 instruction set core 1714 (e.g., a processor with cores that execute the MIPS instruction set of MIPS Technologies of Sunnyvale, CA and/or that execute the ARM instruction set of ARM Holdings of Sunnyvale, CA). The instruction converter 1712 is used to convert the x86 binary code 1706 into code that may be natively executed by the processor without an x86 instruction set core 1714. This converted code is not likely to be the same as the alternative instruction set binary code 1710 because an instruction converter capable of this is difficult to make; however, the converted code will accomplish the general operation and be made up of instructions from the alternative instruction set. Thus, the instruction converter 1712 represents software, firmware, hardware, or a combination thereof that, through emulation, simulation or any other process, allows a processor or other electronic device that does not have an x86 instruction set processor or core to execute the x86 binary code 1706.

Exemplary examples include, but are not limited to:
Example 1. An apparatus comprising: decoder circuitry to decode an instruction having fields for an opcode and at least one operand identifier; and execution circuitry to execute the decoded instruction to perform a 512-bit operation according to the opcode on the at least one operand, wherein at least one of the identified operand and the execution circuitry is less than 512-bit.
Example 2. The apparatus of example 1, wherein the identified at least one operand is a 256-bit vector register and the execution circuitry comprises one 512-bit execution circuit.
Example 3. The apparatus of example 1, wherein the identified at least one operand is a 512-bit vector register and the execution circuitry comprises two 256-bit execution circuits.
Example 4. The apparatus of example 1, wherein the identified at least one operand is a 256-bit vector register and the execution circuitry comprises two 256-bit execution circuits.
Example 5. The apparatus of example 1, wherein the identified at least one operand is a 256-bit vector register and the execution circuitry comprises one 256-bit execution circuit.
Example 6. The apparatus of example 1, further comprising: scheduler circuitry to schedule the decoded instruction on the execution circuitry.
Example 7. The apparatus of example 1, wherein the decoder circuitry is to determine 512-bit operational support based on one or more of the opcode and the at least one identified operand.
Example 8. A method comprising: decoding an instruction having fields for an opcode and at least one operand identifier; and executing the decoded instruction to perform a 512-bit operation according to the opcode on the at least one operand, wherein at least one of the identified operand and the execution circuitry is less than 512-bit.
Example 9. The method of example 8, wherein the identified at least one operand is a 256-bit vector register and the execution circuitry comprises one 512-bit execution circuit.
Example 10. The method of example 8, wherein the identified at least one operand is a 512-bit vector register and the execution circuitry comprises two 256-bit execution circuits.
Example 11. The method of example 8, wherein the identified at least one operand is a 256-bit vector register and the execution circuitry comprises two 256-bit execution circuits.
Example 12. The method of example 8, wherein the identified at least one operand is a 256-bit vector register and the execution circuitry comprises one 256-bit execution circuit.
Example 13. The method of example 8, further comprising: scheduling the decoded instruction on the execution circuitry.
Example 14. The method of example 8, wherein the decoding is to determine 512-bit operational support based on one or more of the opcode and the at least one identified operand.
Example 15. A system comprising: memory to store an instruction; a processor including: decoder circuitry to decode the instruction having fields for an opcode and at least one operand identifier, and execution circuitry to execute the decoded instruction to perform a 512-bit operation according to the opcode on the at least one operand, wherein at least one of the identified operand and the execution circuitry is less than 512-bit.
Example 16. The system of example 15, wherein the identified at least one operand is a 256-bit vector register and the execution circuitry comprises one 512-bit execution circuit.
Example 17. The system of example 15, wherein the identified at least one operand is a 512-bit vector register and the execution circuitry comprises two 256-bit execution circuits.
Example 18. The system of example 15, wherein the identified at least one operand is a 256-bit vector register and the execution circuitry comprises two 256-bit execution circuits.
Example 19. The system of example 15, wherein the identified at least one operand is a 256-bit vector register and the execution circuitry comprises one 256-bit execution circuit.
Example 20. The system of example 15, wherein the decoder circuitry is to determine 512-bit operational support based on one or more of the opcode and the at least one identified operand.

## Claims

1. An apparatus comprising:
decoder circuitry to decode an instruction having fields for an opcode and at least one operand identifier; and
execution circuitry to execute the decoded instruction to perform a 512-bit operation according to the opcode on the at least one operand, wherein at least one of the identified operand and the execution circuitry is less than 512-bit.

2. The apparatus of claim 1, wherein the identified at least one operand is a 256-bit vector register and the execution circuitry comprises one 512-bit execution circuit.

3. The apparatus of claim 1, wherein the identified at least one operand is a 512-bit vector register and the execution circuitry comprises two 256-bit execution circuits.

4. The apparatus of claim 1, wherein the identified at least one operand is a 256-bit vector register and the execution circuitry comprises two 256-bit execution circuits.

5. The apparatus of claim 1, wherein the identified at least one operand is a 256-bit vector register and the execution circuitry comprises one 256-bit execution circuit.

6. The apparatus of any of claims 1-5, further comprising:
scheduler circuitry to schedule the decoded instruction on the execution circuitry.

7. The apparatus of any of claims 1-6, wherein the decoder circuitry is to determine 512-bit operational support based on one or more of the opcode and the at least one identified operand.

8. A method comprising:
decoding an instruction having fields for an opcode and at least one operand identifier; and
executing the decoded instruction to perform a 512-bit operation according to the opcode on the at least one operand, wherein at least one of the identified operand and the execution circuitry is less than 512-bit.

9. The method of claim 8, wherein the identified at least one operand is a 256-bit vector register and the execution circuitry comprises one 512-bit execution circuit.

10. The method of claim 8, wherein the identified at least one operand is a 512-bit vector register and the execution circuitry comprises two 256-bit execution circuits.

11. The method of claim 8, wherein the identified at least one operand is a 256-bit vector register and the execution circuitry comprises two 256-bit execution circuits.

12. The method of claim 8, wherein the identified at least one operand is a 256-bit vector register and the execution circuitry comprises one 256-bit execution circuit.

13. The method of any of claims 8-12, further comprising:
scheduling the decoded instruction on the execution circuitry.

14. The method of any of claims 8-13, wherein the decoding is to determine 512-bit operational support based on one or more of the opcode and the at least one identified operand.
